# EUROPÄISCHE PATENTSCHRIFT

(11) **EP 2 856 625 B1**
(45) Veröffentlichungstag und Bekanntmachung des Hinweises auf die Patenterteilung: **01.08.2018**
(21) Anmeldenummer: 13725633.5
(22) Anmeldetag: 24.05.2013
(51) Int. Cl.: H02M 7/48, H02J 3/38, H02J 9/06

(54) **SPANNUNGSVERSORGUNG FÜR EINEN WECHSELRICHTER**
VOLTAGE SUPPLY FOR AN INVERTER
ALIMENTATION EN TENSION POUR UN ONDULEUR

(30) Priorität: 01.06.2012 AT 502162012
(43) Veröffentlichungstag der Anmeldung: 08.04.2015
(73) Patentinhaber: Fronius International GmbH, 4643 Pettenbach (AT)
(72) Erfinder: DANMAYR, Joachim, A-4542 Nußbach (AT); BLÖCHL, Stefan, 94572 Schöfweg (DE); LUGER, Andreas, A-4616 Weißkirchen (AT); STRIEGL, Dietmar, A-4540 Bad Hall (AT); MÖRTENHUBER, Martin, A-4642 Sattledt (AT)
(74) Vertreter: Patentanwälte Pinter & Weiss OG
(86) Internationale Anmeldenummer: PCT/EP2013/060731
(87) Internationale Veröffentlichungsnummer: WO 2013/178546

(56) Entgegenhaltungen:
- JP-A- H09 149 659
- JP-A- 2003 180 085
- JP-A- 2006 238 610
- JP-A- 2009 017 647
- US-A1- 2002 145 895

## Beschreibung

Die gegenständliche Erfindung betrifft eine Spannungsversorgung für einen Wechselrichter, der ausgangsseitig über eine als Filtereinheit verwendete Drossel mit einem elektrischen Versorgungsnetz verbunden ist, sowie ein Verfahren zum Betrieb einer solchen Spannungsversorgung.

Elektrische Wechselrichter benötigen für den Betrieb eine Spannungsversorgung, zur Erzeugung einer Versorgungsspannung für die Regel- und Steuereinheiten des Wechselrichters, sowie die im Wechselrichter verbauten elektronischen Komponenten. Diese Versorgungsspannung wird häufig durch ein Schaltnetzteil zur Verfügung gestellt, das auch im Wechselrichter integriert sein kann. Solche Wechselrichter werden unter Anderem auch für die Kopplung einer Energiequelle, wie z.B. eine Photovoltaikanlage, einer Windkraftanlage, eines elektrischen Energiespeichers, einer Brennstoffzelle, etc., mit einem elektrischen Versorgungsnetz eingesetzt, um erzeugte elektrische Energie in das Versorgungsnetz einzuspeisen. Ausgangsseitig zum Versorgungsnetz weisen solche Wechselrichter häufig Filtereinheiten, wie z.B. eine Drossel, auf. Das Schaltnetzteil bezieht dabei die für den Betrieb benötigte elektrische Energie aus dem elektrischen Versorgungsnetz, insbesondere um den Wechselrichter auch dann betreiben bzw. bedienen zu können, wenn der elektrische Energiespeicher keine elektrische Energie liefern kann, z.B. während der Nacht bei einer Photovoltaikanlage oder bei Windstillstand bei einer Windkraftanlage. Umgekehrt würde bei einem Ausfall des elektrischen Versorgungsnetzes, z.B. aufgrund eines Kurzschlusses im Versorgungsnetz, auch das Schaltnetzteil und damit auch der Wechselrichter ausfallen. Die elektrische Energiequelle könnte damit keine elektrische Energie mehr in das Versorgungsnetz liefern. Allerdings sehen diverse Normen vor, dass ein Wechselrichter bei einem Ausfall des elektrischen Versorgungsnetzes für eine bestimmte Zeitdauer weiterhin in Betrieb bleiben muss, um bei Bedarf das Versorgungsnetz durch Bereitstellung von Blindleistung zu stützen. Es sind daher Maßnahmen erforderlich, um den Betrieb des Wechselrichters, der durch ein vom elektrischen Versorgungsnetz versorgtes Schaltnetz betrieben wird, auch dann aufrechtzuerhalten, wenn das elektrische Versorgungsnetz ausfällt.

Häufig werden dazu im Schaltnetzteil Kondensatoren eingesetzt, um die Versorgungsspannung für den geforderten Zeitraum zu puffern. Der Nachteil dieser Lösung ist, dass ein solcher Kondensator-Puffer nur für einen gewissen, genau definierten Zeitraum ausgelegt werden kann und aufgrund der benötigten großen Kondensatoren auch sehr viel Platz im Wechselrichter bzw. im Schaltnetzteil benötigt. Außerdem verursachen die teuren Kondensatoren und anderen elektrischen Komponenten auch hohe Kosten.

Als mögliche Alternative ist es auch bekannt, im Schaltnetzteil ein zweites Versorgungsnetzteil vorzusehen, das seine Energie im Falle eines Netzausfalls aus dem elektrischen Energiespeicher bezieht. Aber auch diese Lösung ist nachvollziehbar mit erheblichem Platzbedarf und hohen Kosten verbunden. Eine solche Stromversorgung ist z.B. aus der DE 10 2008 032 317 A1 bekannt. Die Stromversorgung der DE 10 2008 032 317 A1 weist einen Transformator mit zwei Primärwicklungen zweier Primärstromkreise auf, wobei ein erster Primärstromkreis aus dem Zwischenkreis des Umrichters und der zweite Primärstromkreis aus dem Versorgungsnetz gespeist wird. Je nach der im zweiten Primärstromkreis anliegenden Spannung wird zwischen den beiden Primärstromkreisen hin- und hergeschaltet. Jeder Primärstromkreis umfasst einen PWM-Schalter mit zugeordnetem PWM-Controller.

Die JP 2009/017647 A beschreibt die Verwendung eines Umrichters. Da somit kein Gleichrichter und kein Wechselrichter verwendet werden, wird eine ausgangsseitige Drossel eingespart. In der JP 2003/180085 A1 wird in einem Gleichrichter über einen Trafo eine Versorgungsspannung abgegriffen um nach Gleichrichtung eine Steuereinheit zu versorgen, alternativ kann in bekannter Weise eine weitere Spannungsquelle als Versorgung der Steuereinheit dienen. Zusätzlich zum Transformator wird eine zusätzliche Drossel als Ausgangsfilter verwendet. Auch die JP 2006/238610 A1 und die JP H09/149659 A verarbeiten in einem Wechselrichter bzw. einem Umrichter selektiv die Spannung eines Versorgungsnetzes und einer weiteren Spannungsquelle.

Aufgabe der gegenständlichen Erfindung ist es daher, die Nachteile der oben angeführten bekannten Lösungen zu beheben.

Diese Aufgabe wird erfindungsgemäß dadurch gelöst, indem an der ausgangsseitigen Drossel eine sekundärseitige Hilfswicklung vorgesehen ist, die die Ausgangsspannung des Wechselrichter auf die Sekundärseite der Drossel überträgt und in der Spannungsversorgung eine Vergleichseinheit vorgesehen ist, die die Spannung des elektrischen Versorgungsnetzes mit der Spannung der Sekundärseite der Drossel vergleicht und die Spannungsversorgung in Abhängigkeit vom Vergleich entweder vom elektrischen Versorgungsnetz oder über die sekundärseitige Hilfswicklung mit elektrischer Energie versorgt wird. Damit entnimmt die Spannungsversorgung die benötigte elektrische Energie entweder aus dem elektrischen Versorgungsnetz oder direkt vom Ausgang des Wechselrichters. Dazu wird eine Hilfswicklung an der Drossel angeordnet und eine Vergleichseinheit eingefügt, alle anderen Teile der Spannungsversorgung können unverändert bleiben. Diese Anordnung steuert sich darüber hinaus selbsttätig aufgrund der Spannungsniveaus und stellt eine unterbrechungsfreie Spannungsversorgung sicher. Somit müssen weder große, teure Kondensatoren verbaut werden, noch müssen zwei Schaltnetzteile vorgesehen werden. Ganz im Gegenteil kann die erfindungsgemäße Spannungsversorgung sehr einfach und kostengünstig aufgebaut werden.

Wenn in der Spannungsversorgung eingangsseitig ein Eingangs-Gleichrichter und ein Hilfswicklungs-Gleichrichter vorgesehen sind, wobei das Versorgungsnetz mit dem Eingang des Eingangs-Gleichrichters verbunden ist und die Spannung der Sekundärseite der Drossel am Eingang des Hilfswicklungs-Gleichrichters anliegt und die Ausgangsanschlüsse des Eingangs-Gleichrichters und des Hilfswicklungs-Gleichrichters parallel geschaltet sind, kann eine besonders einfach aufgebaute Spannungsversorgung realisiert werden.

Eine ganz besonders einfache Ausführung ergibt sich, wenn als Eingangs-Gleichrichter und/oder als Hilfswicklungs-Gleichrichter Brückengleichrichter verwendet werden.

Dabei ist auch vorteilhaft, in der Spannungsversorgung einen DC-DC-Wandler vorzusehen, dessen Eingang mit den Ausgangsanschlüssen des Eingangs-Gleichrichters und des Hilfswicklungs-Gleichrichters verbunden ist.

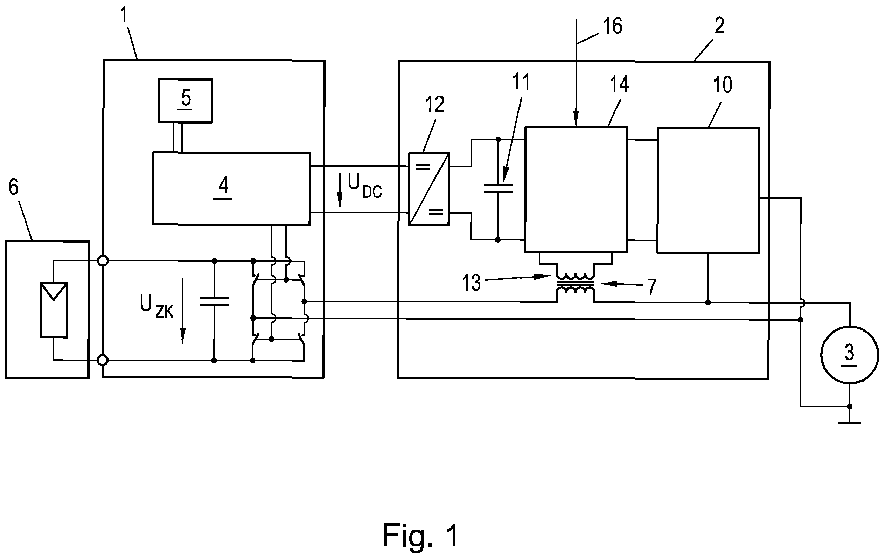

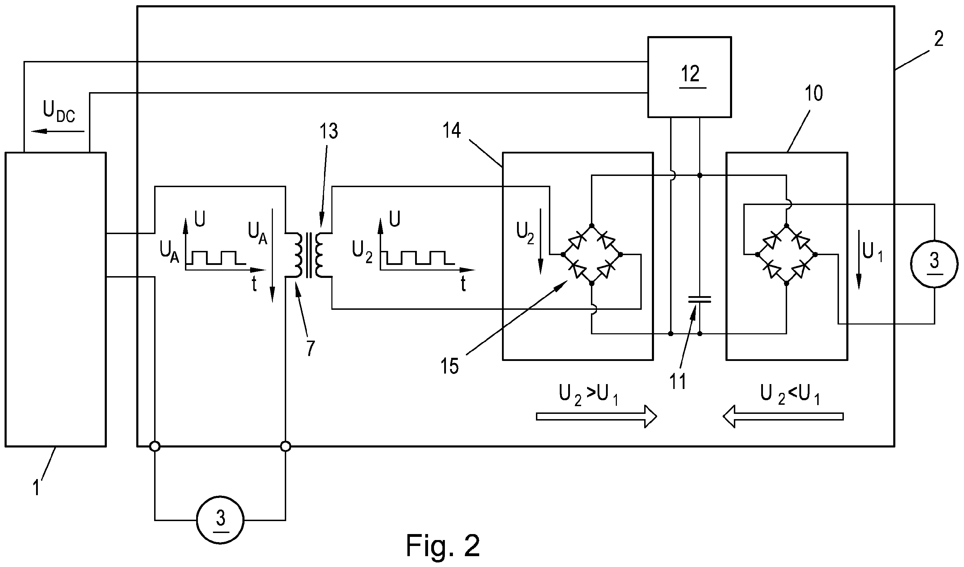

Die gegenständliche Erfindung wird nachfolgend unter Bezugnahme auf die Figuren 1 und 2, die schematisch und nicht einschränkend vorteilhafte Ausgestaltungen der Erfindung zeigen, näher erläutert. Dabei zeigt
Fig.1 ein elektrisches Schaltbild eines erfindungsgemäßen Spannungsversorgung und
Fig.2 eine Ausgestaltung der Spannungsversorgung mit Brückengleichrichtern.

In Fig.1 wird ein Wechselrichter 1 von einer Spannungsversorgung 2 mit elektrischer Energie versorgt, wobei die Spannungsversorgung 2 an ein elektrisches Versorgungsnetz 3, wie z.B. ein 230V Wechselspannungsnetz, angeschlossen ist. Der DC-Ausgang der Spannungsversorgung 3 stellt die Versorgungsspannung U_{DC} des Wechselrichters 1, bzw. der Regel- und Steuereinheit 4, sowie einer Bedieneinheit 5 des Wechselrichters 1, zur Verfügung. Im dargestellten Ausführungsbeispiel koppelt der Wechselrichter 1 eine elektrische Energiequelle 6, wie z.B. hier eine Solarzelle, an das elektrische Versorgungsnetz 3 an. Ein Wechselrichter 1 ist an sich hinlänglich bekannt, weshalb hier nicht näher auf den Aufbau und die Funktion des Wechselrichters 1 eingegangen wird. Ausgangsseitig ist wie ebenfalls bekannt als Filtereinheit eine Drossel 7 vorgesehen. Die Drossel 7 kann wie im vorliegenden Ausführungsbeispiel auch in die Spannungsversorgung 2 integriert sein, insbesondere wenn die Spannungsversorgung 2 und der Wechselrichter 1 als zusammengehörende, auf einander abgestimmte Komponenten ausgeführt sind.

Die Spannungsversorgung 2, z.B. in Form eines Schaltnetzteils, hat hier eingangsseitig einen Gleichrichter 10, z.B. einen Brückengleichrichter, einen Glättungskondensator 11 und ausgangsseitig einen DC-DC-Wandler 12 zur Erzeugung der Versorgungsspannung U_{DC}. Der Glättungskondensator 11 kann auch Teil des DC-DC-Wandlers 12 sein, z.B. in Form einer Zwischenkreiskapazität im DC-DC-Wandler 12 oder kann auch gänzlich entfallen.

Erfindungsgemäß wird die Spannungsversorgung 2 nun durch eine Hilfswicklung 13 auf der Drossel 7 und einer Vergleichseinheit 14 ergänzt. Die Hilfswicklung 13 bildet die Sekundärseite der Drossel 7. Die Hilfswicklung 13 kann z.B. zusätzlichen auf den Eisenkern der Drossel 7 aufgebracht werden. Im Falle eines Mehrphasen-Wechselrichters reicht es an sich aus, nur eine Drossel 7 einer einzigen Phase entsprechend zu ergänzen. Die Vergleichseinheit 14 kann als aktive, z.B. in Form eines Komparators, oder passive Vergleichseinheit, z.B. wie in Fig.2 durch einen Brückengleichrichter, ausgeführt sein. Durch die zusätzliche Hilfswicklung 13 erhält die Drossel 7 nun auch eine Trafofunktion, wie weiter unten eingehend beschrieben, und die Hilfswicklung 13 überträgt die Ausgangsspannung U_{A} des Wechselrichters 1 auf die Sekundärseite der Drossel 7.

Zur Beschreibung der Funktion der erfindungsgemäßen Spannungsversorgung 2 wird auf die Fig. 2 verwiesen. Die Vergleichseinheit 14 ist hier passiv in Form eines Hilfswicklungs-Gleichrichters 15, konkret eines Brückengleichrichters, ausgeführt. Eingangsseitig der Spannungsversorgung 2 liegt die Spannung U₁ des elektrischen Versorgungsnetzes 3 an, die im Eingangs-Gleichrichter 10, hier ebenfalls ein Brückengleichrichter, gleichgerichtet wird und am Glättungskondensator 11 geglättet wird. Auf der Sekundärseite der Drossel 7, gebildet durch die Hilfswicklung 13, wird eine Spannung U₂ aus der Ausgangsspannung U_{A} des Wechselrichters 1 induziert, die im Hilfswicklungs-Gleichrichter 15 gleichgerichtet wird. Dazu wird die Spannung U₂ der Sekundärseite der Drossel 7 an den Eingangsanschluss des Hilfswicklungs-Gleichrichters 15 geschaltet. Der Eingangs-Gleichrichter 10 und der Hilfswicklungs-Gleichrichter 15 sind dabei parallel geschaltet, d.h. dass die Ausgangsanschlüsse der Gleichrichter 10, 15 jeweils miteinander verbunden sind. Die parallel geschalteten Ausgangsanschlüsse der Gleichrichter 10, 15 sind mit den Eingangsanschlüssen des DC-DC-Wandlers 12 verbunden.

Solange die Eingangsspannung U₁ größer ist, als die Spannung U₂ auf der Sekundärseite der Drossel 7 wird die Spannungsversorgung 2 folglich vom Versorgungsnetz 3 gespeist. Das heißt, dass der Eingangs-Gleichrichter 10 aktiv ist. Entsprechend ist der Hilfswicklung-Gleichrichter 15 deaktiviert, da die Dioden aufgrund der geringeren Spannung U₂ sperren. Sinkt die Spannung U₁ im Versorgungsnetz 3 ab, z.B. im Falle eines Netzeinbruches oder Netzausfalls, gilt also U₂>U₁, bezieht die Spannungsversorgung 2 die elektrische Energie über die Sekundärseite der Drossel 7, also über die Hilfswicklung 13, und damit direkt von der Ausgangsspannung U_{A} des Wechselrichters 1. Dementsprechend ist der Eingangs-Gleichrichter 10 aufgrund der geringeren Spannung U₁ und der sperrenden Dioden deaktiviert und der Hilfswicklungs-Gleichrichter 15 aktiviert. Durch den zusätzlichen Hilfswicklungs-Gleichrichter 15 wird somit ein Vergleich der Spannungen U₁ und U₂ bewirkt und der Energiefluss in die Spannungsversorgung 2 (in Fig.2 angedeutet durch die beiden Pfeile in Richtung Glättungskondensator 11) gesteuert. Der Energiefluss regelt sich dabei selbsttätig aufgrund der Spannungsniveaus der Spannungen U₁ und U₂. Es kann also jener Gleichrichter 10, 15 mit der höheren Eingangsspannung mehr Strom für den DC-DC-Wandler 12 bzw. den Kondensator 11 zur Verfügung stellen, sodass dieser entsprechend aktiv ist. Gleichen sich aufgrund der sinkenden Spannung U₁ die Spannungen U₁ und U₂ an, sind in der Umschaltphase kurzfristig auch beide Gleichrichter 10, 15 aktiv. Ist entsprechend die Spannung U₂ ausreichend größer als die Spannung U₁ (im Wesentlichen durch die Schleusenspannung der Dioden vorgegeben), ist alleinig der Hilfswicklungs-Gleichrichter 15 aktiv. Somit ist die Aktivierung des Hilfswicklungs-Gleichrichters 15 unterbrechungsfrei.

Über das Übersetzungsverhältnis der Primärwicklung der Drossel 7 zu der zusätzlichen Hilfswicklung 13, kann die Spannung U2 an der Sekundärseite der Drossel 7 festgelegt werden. In Abhängigkeit von der Höhe der Zwischenkreisspannung U_{ZK} im Wechselrichter 1 und der gewünschten Spannung U₂ kann das Übertragungsverhältnis durch entsprechende Anpassung der Wicklungsanzahl der Hilfswicklung 13 im Verhältnis zur Wicklungsanzahl der Primärwicklung dimensioniert werden. Bei einer einphasigen Spannungsversorgung 2 mit Nennspannung 230V AC und einem Zwischenkreisspannungsbereich um die 400V würde das zu wählende Übertragungsverhältnis zum Beispiel im Bereich 1:1 liegen. Um Spannungsspitzen zu vermeiden kann an der Sekundärseite der Drossel 7 auch eine zusätzliche Schutzbeschaltung vorgesehen werden. Des Weiteren kann durch entsprechende Dimensionierung des Übertragungsverhältnisses, und einer gegebenenfalls vorhandenen Schutzbeschaltung, die Energieflussrichtung für die Versorgung der Spannungsversorgung 2 bestimmt werden. Somit kann bei entsprechender Dimensionierung der Energiefluss so gesteuert werden, dass erst bei einem Netzeinbruch die Energie für die Spannungsversorgung 2 über die Hilfswicklung 13 bezogen wird und damit die Versorgung des Wechselrichters 1 erst dann über diese geschieht. Es wird also mit dem Übertragungsverhältnis und der daraus resultierenden Spannung U₂ definiert bzw. entschieden, von welchem Gleichrichter 10, 15 die Spannungsversorgung 2 versorgt wird. Somit ist der sichere Betrieb des Wechselrichters 1 in jedem Fall gewährleistet.

Sind die Spannung U₁ und U₂ gleich hoch, so wird sich bei passiver Energieflussrichtungssteuerung (z.B. über Brückengleichrichter) der Energiefluss gleichmäßig aufteilen. Bei aktiver Steuerung der Energieflussrichtung (z.B. über eine aktive Vergleichseinheit 14), kann je nach Anwendungsfall die Energie beliebig, entweder vom Versorgungsnetz 3 oder vom Wechselrichter 1 selbst, bezogen werden.

Anstelle einer passiven Vergleichseinheit 14, wie oben beschrieben, könnte auch eine aktive Vergleichseinheit vorgesehen sein. Z.B. könnte ein Komparator, ein logischer Baustein, ein Mikroprozessor, eine speicherprogrammierbare Schaltung, etc. vorgesehen sein, der die beiden Spannungen U₁ und U₂, oder deren gleichgerichteten Werte, vergleicht und in Abhängigkeit vom Vergleichsergebnis die Spannungsversorgung 2 entweder über das Versorgungsnetz 2 oder über die Hilfswicklung 13 mit elektrischer Energie versorgt.

Die Steuerung der Energieflussrichtung kann bei Verwendung einer aktiven Vergleichseinheit 14 auch strategisch erfolgen und muss nicht nur vom Vergleichsergebnis der beiden Spannungen U₁, U₂ abhängen. Zum Beispiel wäre es auch möglich die Umschaltung von einem externen Signal 16, wie z.B. in Fig.1 angedeutet, oder anderer Kriterien abhängig zu machen. Das heißt, dass beispielsweise vorbeugend der Hilfswicklungs-Gleichrichter 15 aktiviert wird, wenn beispielsweise der Wechselrichter 1 bzw. die Spannungsversorgung 2 als externes Signal 16 eine Information über eine bevorstehende Netzabschaltung empfängt oder die Netzspannung kontinuierlich sinkt. Ebenfalls kann die erfindungsgemäße Lösung auch für die Eigenverbrauchsoptimierung der Energiequelle 6, wie z.B. einer PV-Anlage, eingesetzt werden, indem die Komponenten der Energiequelle 6, insbesondere der Wechselrichter 1, aus der selbst produzierten Energie versorgt werden.

Selbstverständlich ist es auch möglich, den Wechselrichter 1 mit der erfindungsgemäßen Spannungsversorgung 2 auch im Inselbetrieb einzusetzen. In diesem Fall kommt für die primäre Versorgung der Spannungsversorgung 2 als elektrisches Versorgungsnetz 3 ein elektrischer Energiespeicher zum Einsatz.

## Patentansprüche

1. Spannungsversorgung für einen Wechselrichter (1), der ausgangsseitig über eine als Filtereinheit verwendete Drossel (7) mit einem elektrischen Versorgungsnetz (3) verbunden ist, **dadurch gekennzeichnet, dass** an der Drossel (7) eine sekundärseitige Hilfswicklung (13) vorgesehen ist, die die Ausgangsspannung (U_{A}) des Wechselrichter (1) auf die Sekundärseite der Drossel (7) überträgt **und dass** in der Spannungsversorgung (2) eine Vergleichseinheit (14) vorgesehen ist, die die Spannung (U₁) des elektrischen Versorgungsnetzes (3) mit der Spannung (U₂) der Sekundärseite der Drossel (7) vergleicht und die Spannungsversorgung (2) in Abhängigkeit vom Vergleich entweder vom elektrischen Versorgungsnetz (3) oder über die sekundärseitige Hilfswicklung (13) mit elektrischer Energie versorgt wird.

2. Spannungsversorgung nach Anspruch 1, **dadurch gekennzeichnet, dass** in der Spannungsversorgung (2) ein Eingangs-Gleichrichter (10) und ein Hilfswicklungs-Gleichrichter (15) vorgesehen sind, wobei das Versorgungsnetz (3) mit dem Eingang des Eingangs-Gleichrichters (10) verbunden ist und die Spannung (U₂) der Sekundärseite der Drossel (7) am Eingang des Hilfswicklungs-Gleichrichters (15) anliegt und die Ausgangsanschlüsse des Eingangs-Gleichrichters (10) und des Hilfswicklungs-Gleichrichters (15) parallel geschaltet sind.

3. Spannungsversorgung nach Anspruch 2, **dadurch gekennzeichnet, dass** der Eingangs-Gleichrichter (10) und/oder der Hilfswicklungs-Gleichrichter (15) als Brückengleichrichter ausgeführt sind.

4. Spannungsversorgung nach einem der Ansprüche 1 bis 3 **dadurch gekennzeichnet, dass** in der Spannungsversorgung (2) ein DC-DC-Wandler (12) vorgesehen ist, dessen Eingang mit den Ausgangsanschlüssen des Eingangs-Gleichrichters (10) und des Hilfswicklungs-Gleichrichters (15) verbunden ist.

5. Spannungsversorgung nach einem der Ansprüche 1 bis 4, **dadurch gekennzeichnet, dass** in der Vergleichseinheit (14) ein Eingang für ein externes Signal (16) vorgesehen ist und das externe Signal (16) beim Vergleich berücksichtigt wird.

6. Verfahren zum Betrieb einer Spannungsversorgung (2) eines Wechselrichters (1), der ausgangsseitig über eine als Filtereinheit verwendete Drossel (7) mit einem elektrischen Versorgungsnetz (3) verbunden wird, **dadurch gekennzeichnet, dass** die Spannung (U₁) des elektrischen Versorgungsnetzes (3) mit der Spannung (U₂) an einer an der Drossel (7) angeordneten Hilfswicklung (13) verglichen wird und die Spannungsversorgung (7) in Abhängigkeit vom Vergleich entweder vom elektrischen Versorgungsnetz (3) oder über die Hilfswicklung (13) mit elektrischer Energie versorgt wird.

7. Verfahren nach Anspruch 6, **dadurch gekennzeichnet, dass** beim Vergleich ein externes Signal (16) berücksichtigt wird.

## Claims

1. A power supply for an inverter (1), which is connected at the output end to an electric power supply network (3) via a throttle (7) the throttle (7) being used as a filter unit, **characterized in that** a secondary-side auxiliary winding (13) which transmits the output voltage (U_{A}) of the inverter (1) to the secondary side of the throttle (7) is provided on the throttle (7), a comparator unit (14), which compares the voltage (U₁) of the electric supply network (3) with the voltage (U₂) of the secondary side of the throttle (7) is provided in the power supply (2), and electric power is supplied to the power supply (2) either by the electric supply network (3) or via the secondary-side auxiliary winding (13), depending on the comparison.

2. The power supply according to Claim 1, **characterized in that** an input rectifier (10) and an auxiliary winding rectifier (15) are provided in the power supply (2), such that the supply network (3) is connected to the input of the input rectifier (10), and the voltage (U₂) of the secondary side of the throttle (7) is applied to the input of the auxiliary winding rectifier (15), and the output terminals of the input rectifier (10) and of the auxiliary winding rectifier (15) are connected in parallel.

3. The power supply according to Claim 2, **characterized in that** the input rectifier (10) and/or the auxiliary winding rectifier (15) is/are designed as bridge rectifiers.

4. The power supply according to any one of Claims 1 to 3, **characterized in that** a DC-DC converter (12) is provided in the power supply (2), its input being connected to the output terminals of the input rectifier (10) and of the auxiliary winding rectifier (15).

5. The power supply according to any one of Claims 1 to 4, **characterized in that** an input for an external signal (16) is provided in the comparator unit (14), and the external signal (16) is taken into account in the comparison.

6. A method for operating a power supply (2) an inverter (1), which is connected at the output end to an electric supply network (3) via a throttle (7), **characterized in that** the voltage (U₁) of the electric supply network (3) is compared with the voltage (U₂) on an auxiliary winding (13) situated on the throttle (7), and electric power is supplied to the power supply (7) either from the electric supply network (3) or via the auxiliary winding (13), depending on the comparison.

7. The method according to Claim 6, **characterized in that** an external signal (16) is taken into account in the comparison.

## Revendications

1. Alimentation en tension destinée à un onduleur (1) qui est relié en sortie, par le biais d'une bobine de choc (7) utilisée comme unité de filtrage, à un réseau d'alimentation électrique (3), **caractérisée en ce qu'**il est prévu au niveau de la bobine de choc (7) un enroulement auxiliaire côté secondaire (13) qui transmet la tension de sortie (U_{A}) de l'onduleur (1) au côté secondaire de la bobine de choc (7) et **en ce qu'**il est prévu dans l'alimentation en tension (2) une unité de comparaison (14) qui compare la tension (U₁) du réseau d'alimentation électrique (3) à la tension (U₂) du côté secondaire de la bobine de choc (7) et l'alimentation en tension (2) est alimentée en énergie électrique en fonction de la comparaison soit par le réseau d'alimentation électrique (3) soit par l'enroulement auxiliaire côté secondaire (13).

2. Alimentation en tension selon la revendication 1, **caractérisée en ce qu'**il est prévu dans l'alimentation en tension (2) un redresseur d'entrée (10) et un redresseur d'enroulement auxiliaire (15), le réseau d'alimentation (3) étant relié à l'entrée du redresseur d'entrée (10) et la tension (U₂) du côté secondaire de la bobine de choc (7) étant appliquée à l'entrée du redresseur d'enroulement auxiliaire (15) et les bornes de sortie du redresseur d'entrée (10) et du redresseur d'enroulement auxiliaire (15) étant montées en parallèle.

3. Alimentation en tension selon la revendication 2, **caractérisée en ce que** le redresseur d'entrée (10) et/ou le redresseur d'enroulement auxiliaire (15) sont réalisés sous la forme d'un pont redresseur.

4. Alimentation en tension selon l'une des revendications 1 à 3, **caractérisée en ce qu'**il est prévu dans l'alimentation en tension (2) un convertisseur continu-continu (12) dont l'entrée est reliée aux bornes de sortie du redresseur d'entrée (10) et du redresseur d'enroulement auxiliaire (15).

5. Alimentation en tension selon l'une des revendications 1 à 4, **caractérisée en ce qu'**il est prévu dans l'unité de comparaison (14) une entrée destinée à un signal externe (16) et le signal externe (16) est pris en compte dans la comparaison.

6. Procédé de fonctionnement d'une alimentation en tension (2) d'un onduleur (1) qui est relié en sortie, par le biais d'une bobine de choc utilisée comme unité de filtrage (7), à un réseau d'alimentation électrique (3), **caractérisé en ce que** la tension (U₁) du réseau d'alimentation électrique (3) est comparée à la tension (U₂) au niveau d'un enroulement auxiliaire (13) disposé au niveau de la bobine de choc (7) et **en ce que** l'alimentation en tension (7) est alimentée en énergie électrique en fonction de la comparaison soit par le réseau d'alimentation électrique (3) soit par l'enroulement auxiliaire (13).

7. Procédé selon la revendication 6, **caractérisé en ce qu'**un signal externe (16) est pris en compte dans la comparaison.
